Europäisches Patentamt

European Patent Office

Office européen des brevets

(11) Numéro de publication: **0 010 491**
A1

# (12) DEMANDE DE BREVET EUROPEEN

(21) Numéro de dépôt: 79400744.3

(22) Date de dépôt: 12.10.79

(51) Int. Cl.³: **A 47 B 21/00**
A 47 B 11/00, A 47 B 9/00
F 16 M 11/12

(30) Priorité: 12.10.78 FR 7829159
15.01.79 FR 7900902

(43) Date de publication de la demande:
30.04.80 Bulletin 80 9

(84) Etats Contractants Designes:
AT BE CH DE GB IT LU NL SE

(71) Demandeur: Compagnie du RONEO société anonyme
21, Avenue Victor Hugo
F-75116 Paris(FR)

(72) Inventeur: Tellier, Pierre Michel
69, Grande Rue
F-77410 Villevaude(FR)

(72) Inventeur: Doillon, Jean Gilbert
10, rue Marcel Andrieux
Montry F-77450 Esbly(FR)

(72) Inventeur: Demaille, Jean-Pierre
11, Villa Ruspoli
F-94100 Saint-Maur(FR)

(74) Mandataire: Robert, Jean-Pierre et al,
CABINET BEAU DE LOMENIE 55, rue d'Amsterdam
F-75008 Paris(FR)

(54) Poste terminal d'entrée et de sortie de données d'un ordinateur.

(57) L'invention concerne un poste terminal d'ordinateur constitué par un dispositif d'entrée 1 et par un dispositif de sortie 2, le dispositif 1 étant séparé du dispositif 2.

Selon l'invention, le poste comprend un support pour le dispositif 2 consitutué par une colonne 4 montée à coulissement le long de son axe dans un socle 5 et à rotation autour de son axe par rapport audit socle, la partie 4a de la colonne étant pourvue d'une console 8 articulée autour d'un axe 7 inclinable pour le dispositif 2 tandis que, entre la colonne 4 et le socle 5, sont prévus des moyens pour leur immobilisation axiale relative à hauteur réglable et des moyens 9 pour leur immobilisation en rotation relative et que, entre la colonne 4 et la console 8, sont prévus des moyens de réglage 10 de l'inclinaison de la console.

EP 0 010 491 A1

./...

FIG.1

# POSTE TERMINAL D'ENTREE ET DE SORTIE DE DONNEES D'UN ORDINATEUR

La présente invention concerne un poste de travail relatif à des installations de traitement de l'information (ordinateurs et autres machines calculatrices). Plus précisément, elle a pour objet le poste de travail et d'exploitation d'un terminal d'ordinateur à partir duquel on interroge ou l'on entre des données dans l'unité centrale et sur lequel on peut recueillir des éléments de réponses ou données en sortie.

De tels postes peuvent comporter un clavier pour l'interrogation ou l'entrée des données et un dispositif d'inscription pour la sortie des données. Ce dispositif peut consister en une imprimante et/ou en un dispositif à affichage lumineux tel qu'un écran récepteur.

Les conditions de travail d'un opérateur posent de nombreux problèmes. Il faut en effet que, sans fatigue excessive, ce dernier puisse appréhender rapidement de manière visuelle le dispositif d'entrée et celui de sortie des données et, de manière manuelle, le dispositif d'entrée et éventuellement un dispositif de transcription des données de sortie lorsque celles-ci apparaissent sur un écran.

Il faut donc que le poste puisse s'adapter le plus correctement possible aux données ergonomiques spécifiques à chaque opérateur quand celui-ci est unique, ou être facilement réglable si plusieurs opérateurs sont susceptibles d'utiliser ce poste. En outre, il convient de pouvoir tenir compte de l'atmosphère ambiante notamment de l'éclairage et du bruit, et donc de permettre un réglage pour placer le poste dans les meilleures conditions possibles d'éclairage et de l'isoler acoustiquement de l'environnement. Enfin, il peut être intéressant de disposer d'un seul poste pouvant desservir plusieurs personnes susceptibles de l'utiliser depuis leur position de travail permanente.

L'invention propose un agencement de moyens permettant par réglages en nombre limité, faciles et rapides à effectuer, de satisfaire à toutes les exigences d'un poste offrant de bonnes conditions de travail tout en lui conférant un caractère esthétique non négligeable.

A cet effet, elle a donc pour objet un poste terminal d'entrée et sortie de données en provenance et en direction d'un centre de traitement, par exemple un ordinateur, constitué par un dispositif d'entrée à actionnement manuel du type clavier et par un dispositif de sortie susceptible d'être exploré visuellement par l'opérateur, le dispositif d'entrée étant séparé du dispositif de sortie.

Selon l'invention, ce poste comprend un support pour ledit dispositif de sortie et un support pour ledit dispositif d'entrée, dans lequel le support pour ledit dispositif de sortie est constitué par un plateau attelé à un mécanisme de réglage de sa hauteur et de son inclinaison, ledit mécanisme étant monté à rotation autour d'un axe vertical dans un socle inférieur avec des moyens d'immobilisation en rotation dans ledit socle, l'inclinaison du plateau étant assurée autour d'un axe, au moins théorique, horizontal en porte à faux par rapport à l'axe vertical susdit et dans lequel le support du dispositif d'entrée susdit est constitué par un jambage solidaire de la partie mobile en rotation dudit mécanisme par rapport audit socle et formé à sa sortie supérieure en une console de support d'un panneau horizontal découpé de manière à entourer au moins partiellement le plateau susdit et à être sensiblement inscrit dans un cercle centré sur l'axe de la colonne et entourant le support du dispositif de sortie.

Dans un premier mode de réalisation de l'invention, le mécanisme susdit est constitué par une embase inférieure horizontale attelée à l'extrémité supérieure d'une colonne verticale montée pivotante dans ledit socle et par un système de bras articulés ou compas s'étendant entre le plateau susdit et ladite embase formant avec eux, vu en élévation, un hexagone articulé déformable, tandis qu'un organe de commande et de réglage de l'ouverture de chacun desdits compas est attelé entre ce dernier et un organe fixe solidaire dudit support.

De manière préférée, le système de bras articulés comporte deux doubles compas, chaque double compas étant formé par deux compas parallèles espacés transversalement et reliés entre eux par une entretoise située au niveau de leur articulation.

L'organe de commande et de réglage susdit peut être alors constitué par une tige filetée coopérant par l'une de ses extrémités avec un orifice taraudé de ladite entretoise perpendiculaire à son axe et attelée par l'autre extrémité à un organe de son entraînement

en rotation, lequel est lui-même solidaire du support par l'intermédiaire d'une articulation dont l'axe est susceptible de se déplacer dans une glissière de guidage verticale fixe.

Dans un second mode de réalisation, le mécanisme susdit est constitué par une colonne montée et réglable à coulissement vertical et à rotation dans ledit socle, la partie supérieure de la colonne susdite est équipée d'un boîtier formant support pour l'axe d'articulation du plateau susdit qui possède une extension s'étendant dans le boîtier au-delà de l'axe d'articulation tandis que des moyens de réglage de l'inclinaison du plateau sont constitués par un système vis-écrou dont la vis est immobilisée en translation sur le boîtier et dont l'écrou est solidaire de ladite extension.

Avantageusement, le plateau est recouvert d'une matière anti-dérapante telle qu'une mousse de matière plastique.

En outre, le poste comporte, au niveau du panneau de support du dispositif d'entrée, une main courante horizontale, disposée le long dudit cercle et solidaire de la partie tournante dudit poste, ladite main courante étant interrompue sur une longueur correspondant à la zone d'accès au dispositif d'entrée.

De plus, il peut être entouré d'un écran sensiblement cylindrique le long du cercle susdit, d'axe vertical attelé à la partie mobile en rotation du poste et ouvert latéralement du côté de la tablette pour dégager une zone d'accès au dispositif d'entrée.

Enfin, pour éviter une trop grande amplitude de rotation pouvant détériorer les câbles de liaison électrique, le socle susdit et la partie tournante du poste comportent des butées coopérant pour limiter l'angle de rotation à une valeur légèrement inférieure à 360°.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :
- la figure 1 est une vue extérieure en élévation du deuxième mode de réalisation susdit du dispositif selon l'invention ;
- la figure 2 est une vue en coupe du dispositif selon la figure 1 ;

- la figure 3 illustre, par un schéma vu de dessus, un poste de travail à quatre opérateurs permanents ;

- la figure 4 illustre l'utilisation du dispositif selon l'invention à un bureau d'accueil ;

- la figure 5 est une vue schématique d'un premier mode de réalisation susdit d'un poste conforme à l'invention ;

- les figures 6 et 7 montrent par des vues partielles le mécanisme de soutien inclinable de l'écran récepteur ;

- la figure 8 illustre le détail de réalisation de la colonne de base de la figure 5 ;

- les figures 9 et 10 montrent en élévation et vue de dessus la disposition générale du poste selon la figure 5.

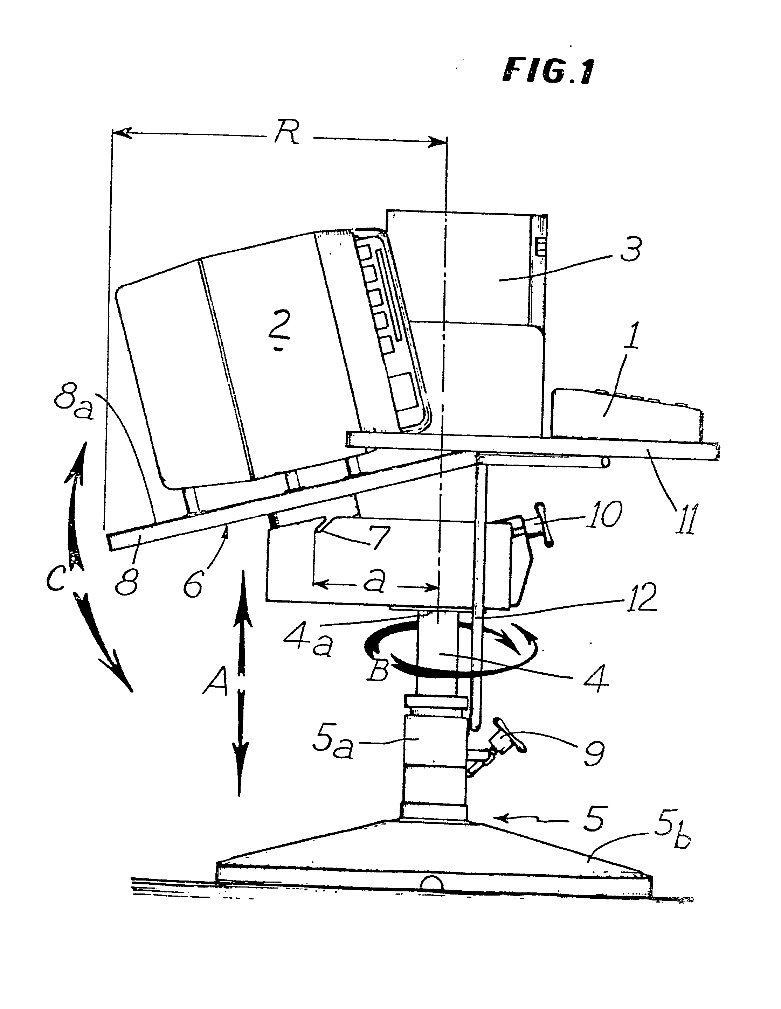

En se reportant tout d'abord à la figure 1, on voit un poste terminal d'entrée et de sortie de données, relié de manière connue à un ordinateur central. Ce poste comporte un dispositif 1 d'entrée, et un dispositif 2 de sortie des données, séparé du dispositif d'entrée. Le dispositif 1 est ici un clavier tandis que le dispositif 2 est un récepteur comportant un écran d'affichage. Ce dispositif 2 pourrait être également une imprimante. En 3, on a représenté des moyens (registres, livres) permettant soit de transcrire ou d'inscrire les données de sortie soit de trouver les codes nécessaires à l'entrée des données par le clavier 1. Le poste de la figure 1 sera de ce fait spécialement adapté à l'usage en "libre-service" c'est-à-dire occasionnel par une pluralité d'opérateurs successifs.

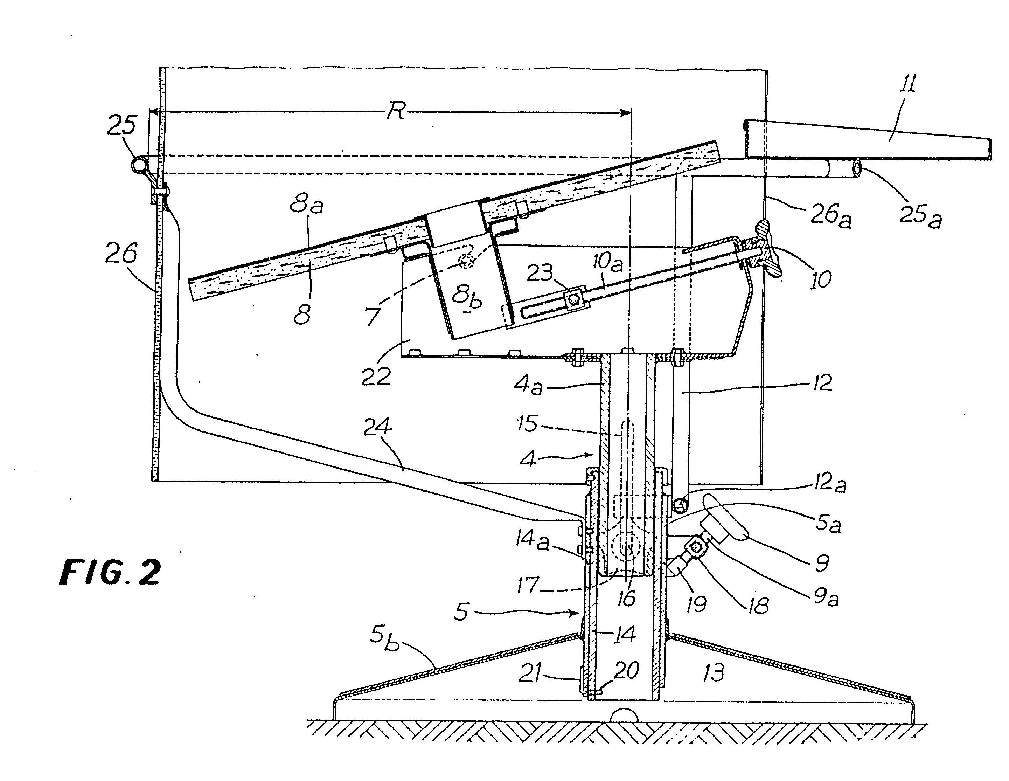

Les moyens constitutifs du poste selon l'invention sont composés d'un support pour le récepteur 2 qui comprend une colonne 4 de soutien, verticale et montée à coulissement le long de son axe dans un socle 5 selon les flèches A et à rotation autour de son axe et par rapport au socle selon les flèches B. La partie supérieure 4a est pourvue d'une console 6, articulée autour d'un axe 7 sensiblement horizontal. Cette console 6 forme plateau 8 de soutien pour le récepteur 2 qui y est simplement posé. Afin qu'il ne se produise pas de glissement lors de l'inclinaison selon les flèches C de ce plateau, on a recouvert sa face supérieure d'une couche de matière anti-dérapante 8a par exemple une mousse de matière plastique. Sur cette figure sont également visibles, un premier bouton 9 à manoeuvre manuelle qui permet d'immobiliser en rotation la colonne 4 par rapport au socle 5, un second bouton 10 également manoeuvrable manuellement qui permet de commander l'inclinaison du plateau 8 autour de son axe 7. Enfin, le support du clavier 1 comporte une tablette 11 soutenue par un jambage 12 attelé à une partie 5a du socle 5, solidaire en rotation avec la tige 4 (comme cela sera représenté plus en détail sur la figure 2).

On aura noté que l'axe 7 d'inclinaison du plateau 8 (qui se trouve sensiblement sous un diamètre de ce dernier) est disposé en porte à faux par rapport à l'axe vertical de la colonne 4 et distant de ce dernier d'une valeur $a$. Cette disposition permet d'équilibrer radialement le poste tel qu'il est équipé de sa tablette 11 afin qu'il puisse être inscrit dans un cercle horizontal de rayon sensiblement égal à R. On expliquera dans ce qui suit l'avantage d'une telle disposition qui déjà présente un intérêt esthétique.

Enfin, il faut noter la forme tronconique de l'embase 5b du socle 5 qui peut être recouverte d'un caoutchouc anti-dérapant ou analogue et constituer repose-pieds pour l'utilisateur.

Sur la figure 2, on retrouve certains des éléments précédemment décrits, avec les mêmes références. On voit que le socle 5 porte, par l'intermédiaire de son embase tronconique 5b, un premier fourreau fixe 13 sensiblement vertical. Ce fourreau reçoit à rotation un second fourreau 14 qui comporte une surface d'épaulement 14a par laquelle il repose sur l'extrémité supérieure du fourreau 13. La partie du fourreau 14, située au-dessus de cet épaulement 14a, constitue la partie mobile en rotation 5a du socle 5. Le fourreau 14 reçoit à coulissement la colonne 4. Cette colonne 4 comporte une rainure longitudinale 15, le long d'une de ses génératrices, qui coopère avec l'extrémité d'une vis 16 traversant la partie 5a du fourreau 14 et qui est manoeuvrable par un bouton 17. L'extrémité de la vis 16 agit comme une butée d'immobilisation en rotation de la colonne 4 sur la partie 5a et dans sa position serrée permet d'immobiliser en coulissement la colonne sur le fourreau 14. On voit donc que l'on peut régler la hauteur de sortie de la colonne 4.

Le bouton 9, quant à lui, est solidaire d'une vis 9a qui peut être vissée dans un écrou 18 porté par la partie 5a du fourreau 14. Un logement 19 porté par le fourreau 13 peut recevoir l'extrémité de la vis 9a pour immobiliser en rotation le fourreau 14 sur le socle 5 et, par suite, le colonne 4 sur le socle. On aura noté qu'il s'agit ici d'une indexation angulaire dans une seule position contrairement au réglage variable de la hauteur.

Lorsque l'on désengage la vis 9a du logement 19, l'ensemble 4, 14 peut tourner par rapport au socle 5. Cependant, pour empêcher une rotation supérieure à 360° environ - qui serait nuisible aux connexions électriques - le fourreau 14 porte à sa base une vis 20 dont la tête, située à l'extérieur, forme saillie susceptible de rencontrer l'un et l'autre des côtés d'une butée 21 placée sur son trajet lors de la rotation et portée par la partie inférieure du fourreau 13. La partie supérieure 4a de la colonne porte un boîtier 22 qui constitue le support de l'axe 7 susdit. Le plateau 8 se prolonge par une extension 8b dans le boîtier 22 au-delà de l'axe 7. A cette extension est fixé, de manière articulée, l'écrou 23 d'un système vis-écrou, dont la vis 10a est solidaire du bouton 10 de commande de l'inclinaison du plateau 8. La vis 10a est solidaire en translation du boîtier 22. On voit donc que la manoeuvre du bouton 10 provoque le déplacement de l'écrou 23 et donc l'inclinaison du plateau autour de l'axe 7.

Sur cette figure 2 également, on voit que le jambage 12 de support de la tablette 11 est fixé par sa partie inférieure 12a sur un étrier solidaire de la partie 5a du fourreau 14. Ainsi, la tablette 11 n'est pas réglable en hauteur mais peut tourner avec l'ensemble. On a également représenté une jambe 24 également fixée à ladite partie 5a constituant un élément d'attelage pour une main courante 25 circulaire et pour un écran 26 de protection et d'isolation du poste selon l'invention. Cet écran 26 est sensiblement cylindrique et, de même que la main courante, est interrompu pour préserver l'accès au poste du côté de la tablette 11 (voir extrémités 25a de la main courante et 26a de l'écran). On notera que la main courante et l'écran ont pour rayon sensiblement le rayon R susdit et inscrivent la totalité du poste.

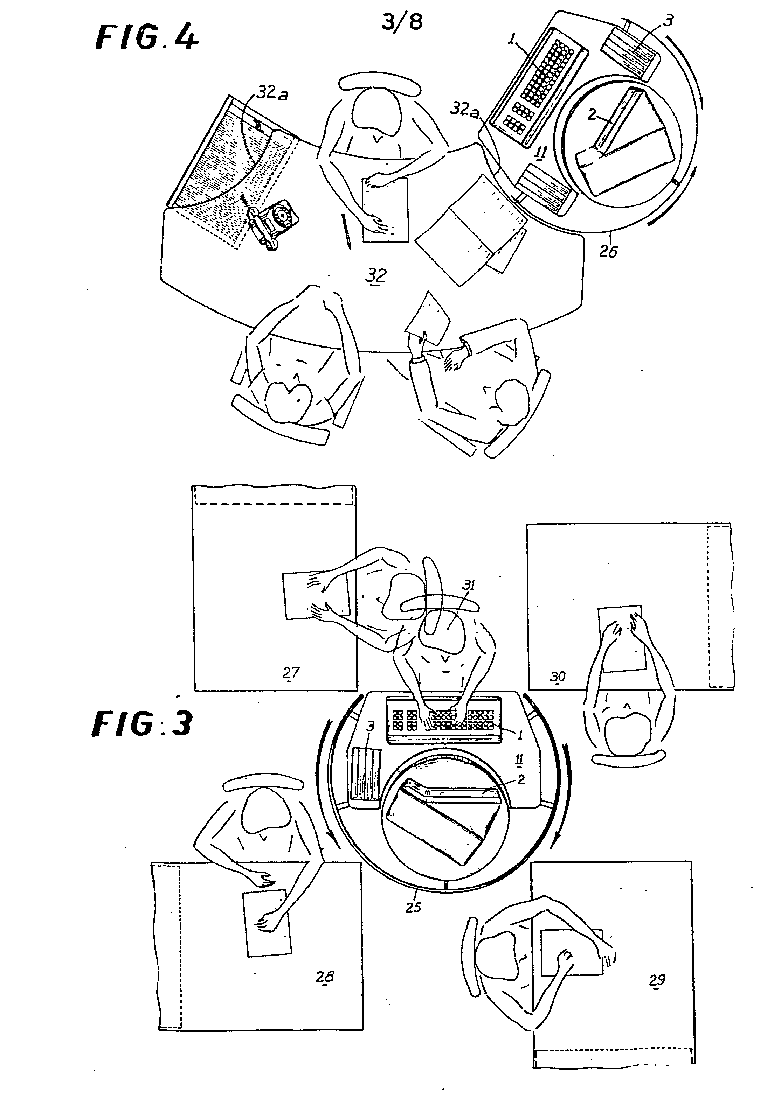

La figure 3 illustre par une vue de dessus, la disposition du poste selon l'invention pouvant desservir quatre personnes installées à demeure aux tables de travail 27, 28, 29 et 30. La main courante 25 sert à l'appel du poste ou à son renvoi. Le poste est utilisable comme illustré par la personne 31 qui peut le régler au moins partiellement à sa convenance (notamment orienter l'écran correctement en fonction de l'incidence de l'éclairage).

La figure 4 montre enfin l'installation du poste selon l'invention, à proximité d'un bureau d'accueil. Le poste est pourvu de son écran 26 et s'intègre dans une échancrure 32a prévue à cet effet aux extrémités du bureau 32. Ainsi, l'entrée et la sortie des données peuvent être réalisées dans un espace abrité des regards indiscrets ou d'une atmosphère bruyante.

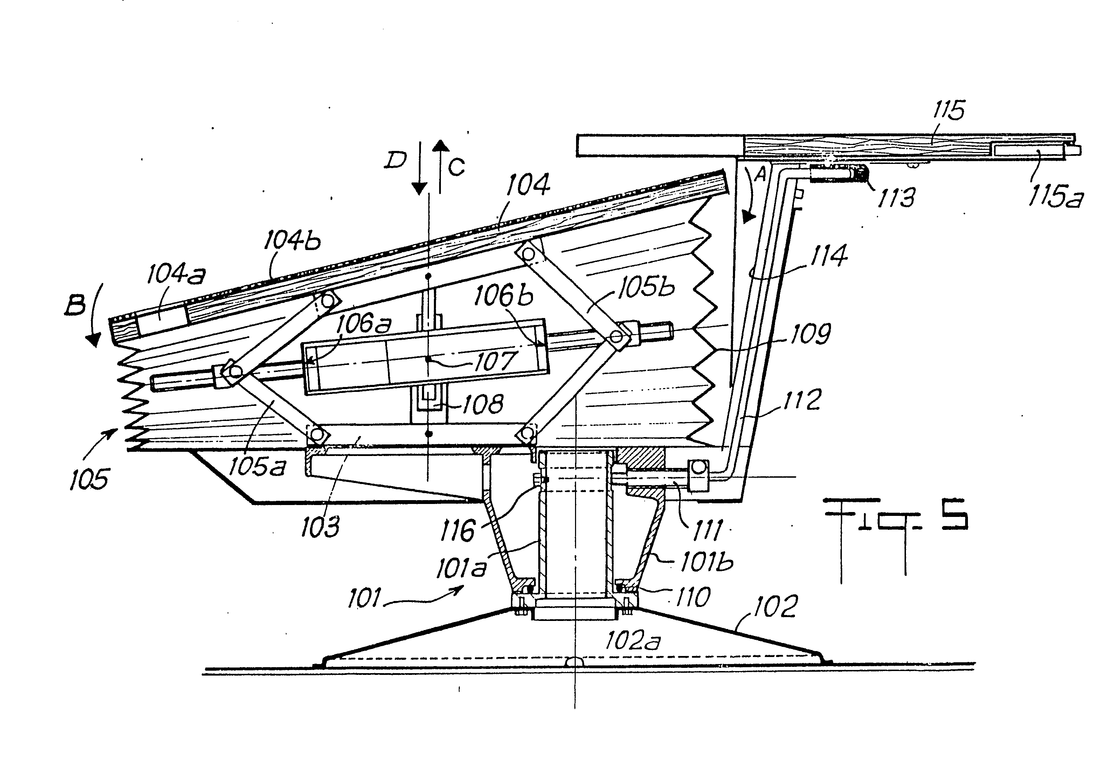

En se reportant à la figure 5, on voit un autre mode de réalisation du poste terminal d'entrée et de sortie de données, selon l'invention. Le dispositif d'entrée et le dispositif de sortie ne sont pas représentés.

Le support selon l'invention est constitué par une colonne verticale 101 de soutien dont un moyeu 101a est solidaire d'un socle 102 et dont la partie extérieure 101b, issue par exemple de fonderie, est montée à rotation sur le moyeu 101a. Le moyeu 101a sera un tube alors que le socle 102 sera avantageusement réalisé en tôle d'acier repoussé, revêtu d'une peinture de protection et d'un revêtement extérieur afin de former repose-pieds anti-dérapant. L'extrémité supérieure de ladite partie 101b est pourvue d'une embase sensiblement horizontale 103. Un plateau 104 destiné à recevoir le récepteur à écran non représenté, est attelé à l'embase 103 par l'intermédiaire d'un système de bras articulés 105.

Ce système, représenté schématiquement sur la figure 5 en élévation, comporte deux compas 105a et 105b, chacun d'eux étant articulé par l'extrémité libre de ses bras respectivement à l'embase 103 et au plateau 104. On voit que le plateau, l'embase et les compas forment dans le plan de la figure 5, un hexagone déformable et qu'en faisant varier l'angle d'ouverture de l'un et/ou de l'autre des compas on provoque l'inclinaison avant ou arrière du plateau 104 selon les flèches A et B et/ou l'élévation ou l'abaissement de ce plateau selon les flèches C et D. La variation de cet angle d'ouverture est réalisée par le moyen d'organes 106a pour le compas 105a et 106b pour le compas 105b, représentés schématiquement sur cette figure mais dont un mode de réalisation préféré est illustré par les figures 2 et 3. Ces organes 106a et 106b de commande et de réglage de l'angle d'ouverture des compas sont attelés à une partie fixe du support (ici l'embase 103) au moyen d'un axe d'articulation transversal 107 qui est

susceptible de se déplacer dans une glissière ou guidage verticale fixe 108. On a représenté en 109, un protecteur à soufflets pour le mécanisme de soutien inclinable, disposé entre l'embase 103 et le plateau 104.

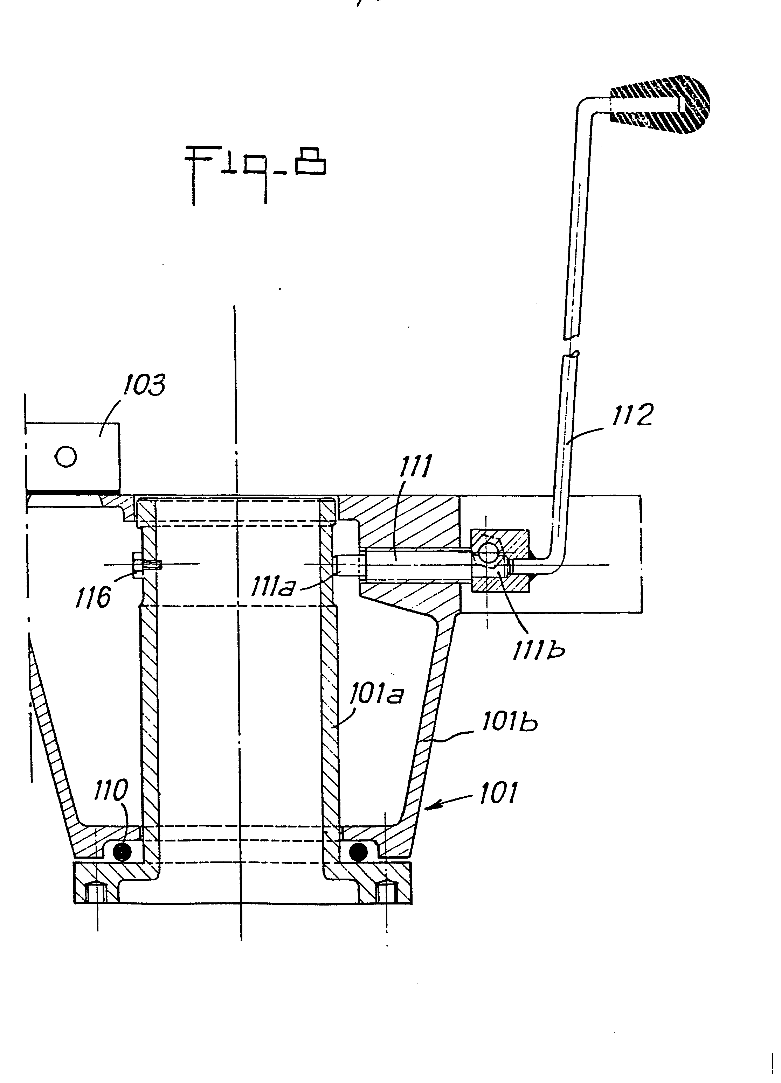

On notera par ailleurs sur cette figure et la figure 8, qui en est une vue de détail, que la partie 101b de la colonne 101, montée à rotation autour du moyeu 101a, repose sur le socle 102 par une butée à billes 110. En outre, une vis 111 pénètre, traverse l'extrémité supérieure de ladite partie 101b au moyen d'un orifice taraudé et est susceptible de venir en appui sur le tube 101a par son extrémité 111a. Son autre extrémité 111b est fixée à un levier 112 qui est coudé vers le haut et comporte une poignée de manoeuvre 113. En agissant sur la poignée dans un sens perpendiculaire au plan des figures, on actionne en rotation autour de son axe la vis 111 et on peut ainsi bloquer la partie 101b sur le moyeu 101a dans une quelconque orientation angulaire relative des deux pièces 101a et 101b.

Sur la figure 5, on voit également un support,pour le dispositif d'entrée des données,constitué par deux tubes 114 dont un seul est représenté et une tablette 115 devant recevoir le clavier non représenté. Ces tubes 114 sont solidaires par leur extrémité inférieure de la partie 101b susdite de la colonne alors que leur extrémité supérieure ouverte reçoit verticalement une fiche mâle, non représentée, solidaire du plateau 115 et perpendiculaire à ce dernier. La tablette 115 est réglable en hauteur par rapport aux tubes 114 par exemple au moyen d'une vis engagée transversalement dans chacune des fiches et blocable sur le tube correspondant en travers d'une lumière verticale oblongue dont la longueur détermine la plage de réglage.

La figure 5 montre également un orifice 102a ménagé à la base du socle 102 pour le passage des câbles de connexion du dispositif de sortie des données, ces câbles passant ensuite à l'intérieur de la partie 101a pour sortir enfin au niveau du plateau 104 par l'orifice 104a. D'autres conducteurs peuvent également être logés dans le socle et la colonne par ce passage, notamment ceux d'alimentation des organes 106a et 106b et ceux de liaison du clavier à l'unité d'ordinateur. Ainsi, on assure une protection contre l'arrachement et les ruptures accidentelles de ces câbles lors des rotations du dispositif sur son pivot 101a.

Enfin, une vis 116 (voir figures 5 et 8) placée sur la partie supérieure du pivot 101a, constitue une butée à la rotation du dispositif autour de ce pivot limitant cette dernière à une valeur un peu inférieure à 360°, la tête de la vis 116 étant placée sur le trajet de l'extrémité 111a de la vis 111.

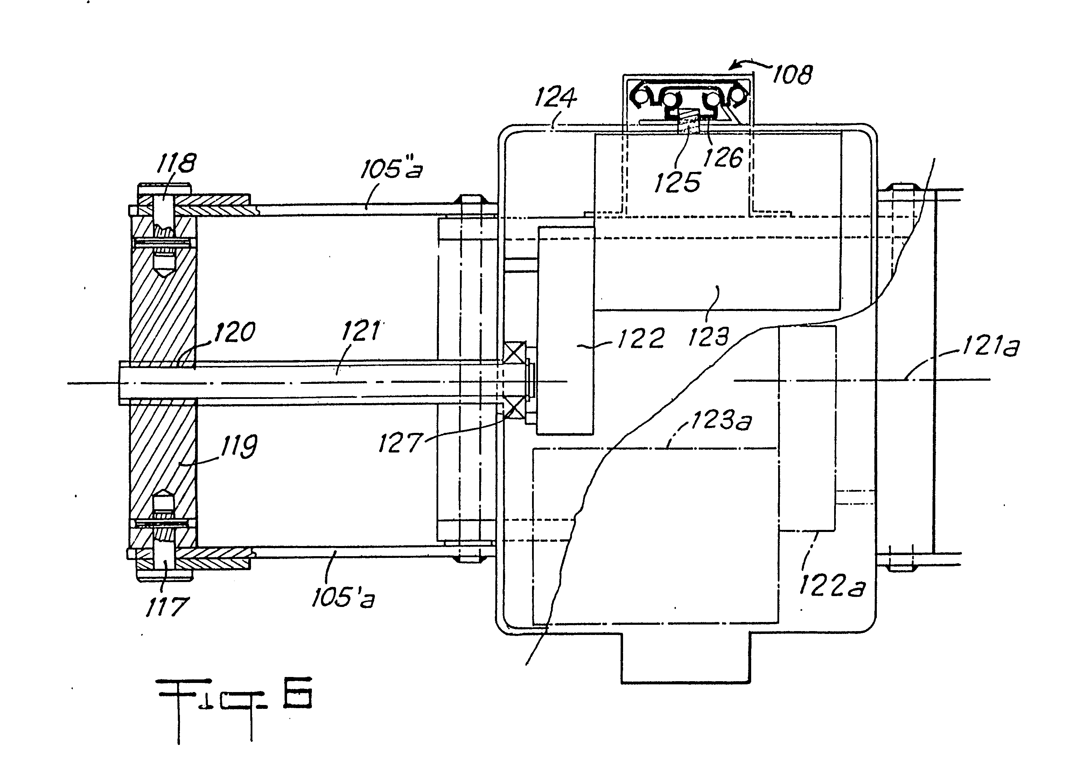

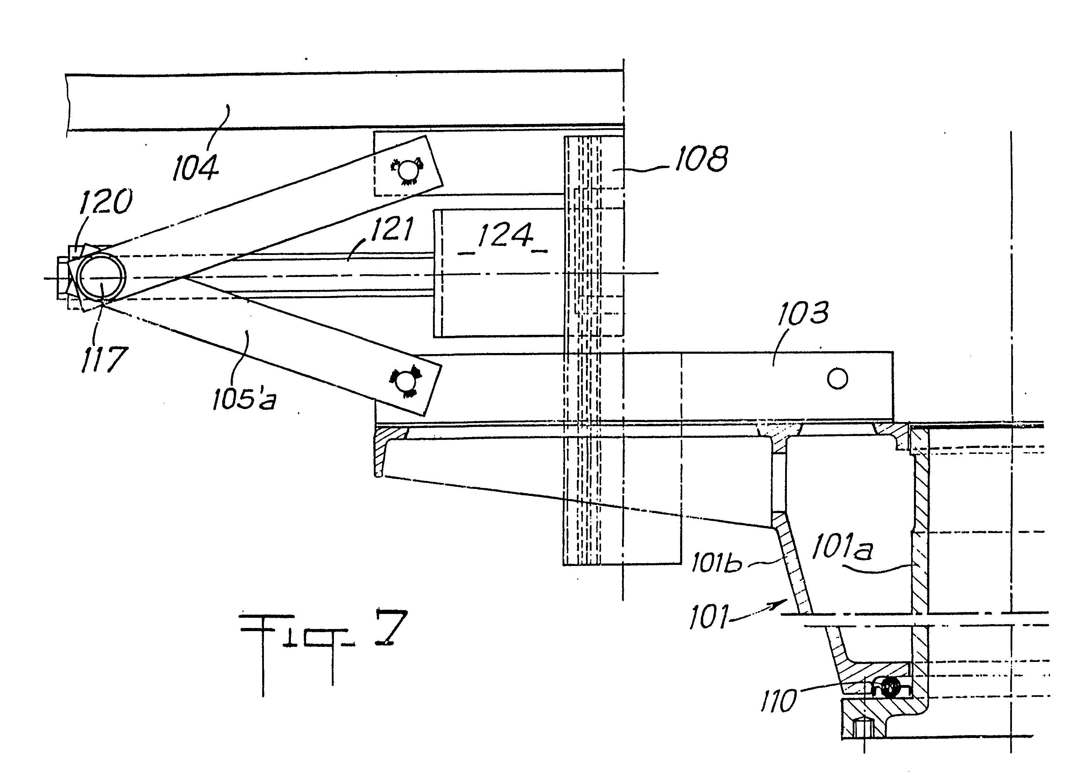

Sur les figures 6 et 7, on retrouve certains des éléments déjà décrits avec les mêmes références. Ces figures sont sensiblement des demi-vues respectivement de dessus et d'élévation du mécanisme de soutien inclinable de l'écran. Dans cette réalisation, les compas tels que 105a sont en fait constitués par deux compas 105'a et 105''a parallèles mais écartés transversalement. Leurs articulations ou charnières 117, 118 sont réunies par une entretoise 119 qui possède un orifice taraudé 120 sensiblement perpendiculaire à son axe. Une tige filetée 121 vient se visser et se dévisser dans cet orifice lorsqu'elle est animée d'un mouvement de rotation. Son entraînement en rotation lui est conféré par l'arbre de sortie d'un réducteur 122, lui-même entraîné par un moteur 123. Le groupe moto-réducteur est électrique et est fixé à un cadre ou berceau 124. Le cadre 124 est articulé en 125 sur un élément vertical 126 qui fait office de coulisse dans la glissière verticale 108. Les figures n'explicitent pas le fait que la glissière 108 est télescopique de manière à s'étendre constamment entre le plateau 104 auquel elle est articulée et l'embase 103 quelle que soit la distance qui les sépare. On notera également que l'immobilisation de la tige filetée 121 en translation est assurée en 127 au niveau du cadre 124. Bien entendu, le même dispositif 121a, 122a, 123a est contenu dans le cadre 124 pour l'actionnement du compas 105b.

Les groupes moto-réducteurs peuvent être commandés séparément ou ensemble au moyen de contacts électriques 115a (voir figure 5), placés par exemple au niveau de la tablette 115 et actionnés manuellement par l'utilisateur. On voit que l'on peut ainsi commander à volonté les quatre mouvements selon les flèches A, B, C, D.

Dans l'esprit du système vis-écrou, tel qu'il apparaît en regard des figures 6 et 7, on peut également prévoir une commande manuelle de la rotation des tiges 121, 121a au moyen de manivelles et pignons.

On peut également prévoir que la variation de l'angle des compas soit assurée au moyen d'une tige animée d'un mouvement de translation selon son axe. Ce mouvement peut lui être communiqué au moyen d'un vérin (hydraulique-pneumatique-électrique) ou à la manière d'un système pignon-crémaillère à moteur ou manuel.

Les dispositions de l'invention offrent de nombreux avantages. Tout d'abord, ce support présente un ensemble de réglages qui permettent d'adapter parfaitement, facilement et rapidement le poste à la morphologie de l'utilisateur.

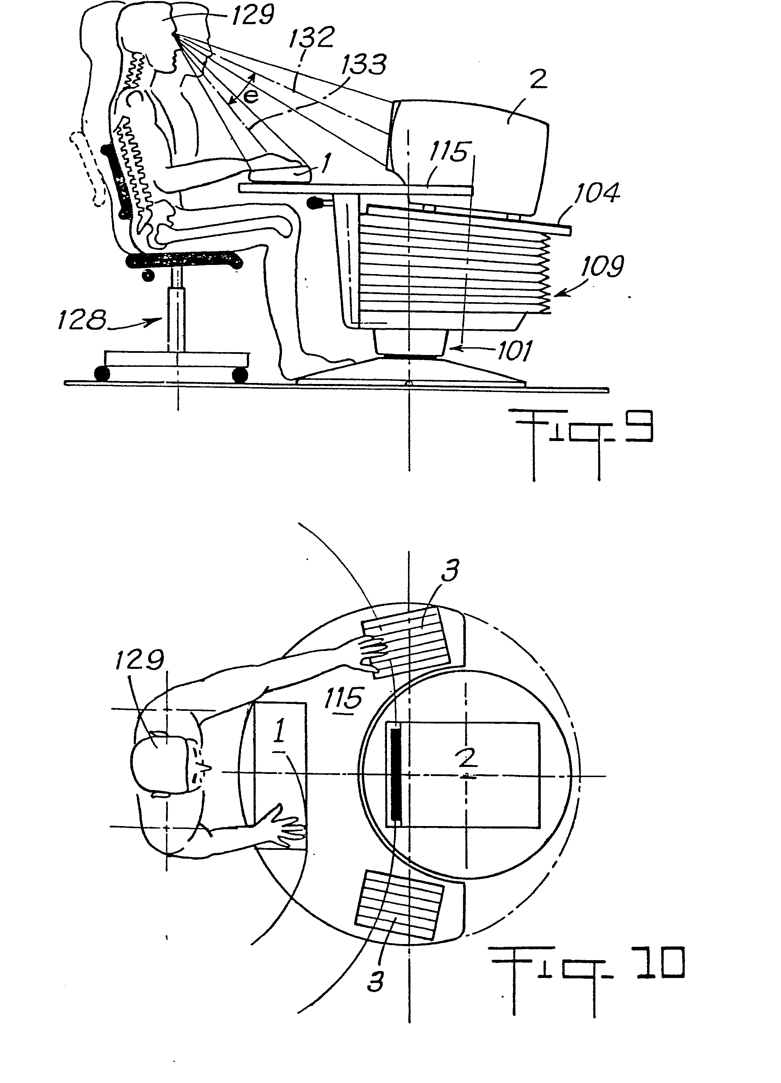

Ainsi, comme on le voit sur la figure 9, le réglage en hauteur de la tablette 115 supportant le clavier en association avec le réglage en hauteur d'un siège 128 ainsi que celui de l'inclinaison de son dossier permettent l'installation dans des conditions optimales de l'utilisateur 129 par rapport au clavier 1. Le récepteur à écran d'affichage lumineux 2 placé sur le plateau 8 ou 104 peut être réglé d'une part en hauteur, d'autre part en inclinaison et, enfin, en orientation angulaire autour de la colonne 4 ou 101 par les mécanismes décrits ci-dessus.

Ces réglages permettent tout d'abord de prendre en compte tous les types de récepteurs actuellement sur le marché qui sont extrêmement différents les uns des autres du point de vue de leurs dimensions. Cette possibilité est assurée par l'élévation ou l'abaissement du plateau 8 ou 104 par rapport à la tablette 11 ou 115. On parvient ainsi à rendre minimal l'angle e formé par les deux lignes de vision 132, 133 ce qui permet d'explorer clavier et écran avec un minimum de mouvements de la tête pour l'opérateur.

Le réglage en inclinaison permet d'une part de placer l'écran sensiblement perpendiculaire à la ligne de vision 132 et ainsi d'éviter la déformation optique des caractères affichés et les erreurs possibles et, d'autre part, d'éliminer les brillances apparaissant sur l'écran pour faciliter ainsi la lecture et diminuer la fatigue visuelle.

On diminue également de façon sensible les reflets en recouvrant le plateau 8 ou 104 d'une couche 8a ou 104b non brillante et notamment d'une matière en mousse alvéolaire qui forme élément de retenue pour le récepteur à écran et l'empêche de glisser lors des inclinaisons, ce dernier étant simplement posé sur le plateau.

Enfin, le réglage en rotation de l'ensemble autour de la colonne 4 ou 101 permet d'une part d'orienter l'écran pour le placer dans une zone dans laquelle l'éclairage ambiant ne se reflète pas sur l'écran et d'autre part, lorsque le blocage est desserré, de servir deux, trois ou quatre utilisateurs disposés en étoile autour de lui chacun d'eux appelant l'ensemble au moyen d'une main courante 25 (voir figure 3).

Sur la figure 10 enfin, concernant une version du poste sans main courante, on voit que la tablette 115 affecte la forme d'un croissant offrant une grande surface de travail sur laquelle on peut déplacer le clavier, disposer des accessoires tels que des registres 3 ou des appareils d'éclairage. Par ailleurs, on notera que l'ensemble du poste est inscrit dans un cercle matérialisé sur plus de la moitié de sa circonférence par le bord extérieur de la tablette 115. Ainsi, aucun angle saillant ne déborde de ce cercle ce qui offre l'avantage d'éviter les heurts entre le poste et des objets ou des personnes à sa proximité lors de sa rotation.

L'invention trouve une application intéressante dans le domaine du mobilier de bureau. Elle n'est pas limitée à la description qui vient d'en être donnée mais couvre au contraire, toutes les variantes qui pourraient lui être apportées sans sortir de son cadre ni de son esprit.

REVENDICATIONS

1 - Poste terminal d'entrée et sortie de données en provenance et en direction d'un centre de traitement, par exemple un ordinateur, constitué par un dispositif d'entrée à actionnement manuel du type clavier et par un dispositif de sortie susceptible d'être exploré visuellement par l'opérateur, le dispositif d'entrée étant séparé du dispositif de sortie, caractérisé en ce qu'il comprend un support pour ledit dispositif de sortie et un support pour ledit dispositif d'entrée, dans lequel le support pour ledit dispositif de sortie est constitué par un plateau attelé à un mécanisme de réglage de sa hauteur et de son inclinaison, ledit mécanisme étant monté à rotation autour d'un axe vertical dans un socle inférieur avec des moyens d'immobilisation en rotation dans ledit socle, l'inclinaison du plateau étant assurée autour d'un axe, au moins théorique, horizontal en porte à faux par rapport à l'axe vertical susdit et dans lequel le support du dispositif d'entrée susdit est constitué par un jambage solidaire de la partie mobile en rotation dudit mécanisme par rapport audit socle et formé à sa sortie supérieure en une console de support d'un panneau horizontal découpé de manière à entourer au moins partiellement le plateau susdit et à être sensiblement inscrit dans un cercle centré sur l'axe de la colonne et entourant le support du dispositif de sortie.

2 - Poste selon la revendication 1, caractérisé en ce que le mécanisme susdit est constitué par une embase inférieure horizontale attelée à l'extrémité supérieure d'une colonne verticale montée pivotante dans ledit socle et par un système de bras articulés ou compas s'étendant entre le plateau susdit et ladite embase formant avec eux, vu en élévation, un hexagone articulé déformable, tandis qu'un organe de commande et de réglage de l'ouverture de chacun desdits compas est attelé entre ce dernier et un organe fixe solidaire dudit support.

3 - Poste selon la revendication 2, caractérisé en ce que le système de bras articulés comporte deux doubles compas, chaque double compas étant formé par deux compas parallèles espacés transversalement et reliés entre eux par une entretoise située au niveau de leur articulation.

13       0010491

4 - Poste selon la revendication 3, caractérisé en ce que l'organe de commande et de réglage susdit est constitué par une tige filetée coopérant par l'une de ses extrémités avec un orifice taraudé de ladite entretoise perpendiculaire à son axe et attelée par l'autre extrémité à un organe de son entraînement en rotation, lequel est lui-même solidaire du support par l'intermédiaire d'une articulation dont l'axe est susceptible de se déplacer dans une glissière de guidage verticale fixe.

5 - Poste selon la revendication 4, caractérisé en ce que l'organe d'entraînement susdit est un moteur électrique.

6 - Poste selon la revendication 4, caractérisé en ce que l'organe d'entraînement susdit est manuel.

7 - Poste selon la revendication 3, caractérisé en ce que l'organe de commande et de réglage susdit est constitué par une tige attelée par l'une de ses extrémités à l'entretoise susdite et entraînée en translation le long de son axe à son autre extrémité par un organe d'entraînement solidaire du support par l'intermédiaire d'une articulation dont l'axe est susceptible de se déplacer dans une glissière verticale fixe.

8 - Poste selon la revendication 7, caractérisé en ce que ledit organe est un vérin commandé électriquement, pneumatiquement ou hydrauliquement.

9 - Poste selon la revendication 7, caractérisé en ce que ledit organe est une roue dentée actionnée manuellement et coopérant avec une crémaillère ménagée sur la tige.

10 - Poste selon la revendication 2, caractérisé en ce que le mécanisme inclinable de soutien susdit est placé dans une enveloppe à soufflet s'étendant entre ladite embase et ledit plateau.

11 - Poste selon la revendication 1, caractérisé en ce que le mécanisme susdit est constitué par une colonne montée et réglable à coulissement vertical et à rotation dans ledit socle, la partie supérieure de la colonne susdite est équipée d'un boîtier formant support pour l'axe d'articulation du plateau susdit, qui possède une extension s'étendant dans le boîtier au-delà de l'axe d'articulation, tandis que des moyens de réglage de l'inclinaison du plateau sont constitués par un système vis-écrou dont la vis est immobilisée en

translation sur le boîtier et dont l'écrou est solidaire de ladite extension.

12 - Poste selon la revendication 1, caractérisé en ce que le plateau est recouvert d'une matière anti-dérapante telle qu'une mousse de matière plastique.

13 - Poste selon la revendication 1, caractérisé en ce qu'il comporte, au niveau du panneau de support du dispositif d'entrée, une main courante horizontale, disposée le long dudit cercle et solidaire de la partie tournante dudit poste, ladite main courante étant interrompue sur une longueur correspondant à la zone d'accès au dispositif d'entrée.

14 - Poste selon la revendication 1, caractérisé en ce qu'il est entouré d'un écran sensiblement cylindrique le long du cercle susdit, d'axe vertical attelé à la partie mobile en rotation du poste et ouvert latéralement du côté de la tablette pour dégager une zone d'accès au dispositif d'entrée.

15 - Poste selon la revendication 1, caractérisé en ce que le socle susdit et la partie tournante du poste comportent des butées coopérant pour limiter l'angle de rotation à une valeur légèrement inférieure à 360°.

FIG.1

0010491

1/8

FIG. 2

2/8

0010491

0010491

FIG.4

3/8

32a

1

3

32a

2

11

32

26

FIG.3

27

31

30

3

1

11

2

25

28

29

D↓  ↑C

B

104
104b
104a
106a
106b
105b
107
108
105a
103
116
101a
101
101b
110
105
102
102a
111
112
109
114
A
113
115
115a

Fig. 5

4/8

0010491

Fig 6

0010491

Fig. 7

0010491

Fig.8

0010491

Fig. 9

Fig. 10

## DOCUMENTS CONSIDERES COMME PERTINENTS

| Catégorie | Citation du document avec indication, en cas de besoin, des parties pertinentes | Revendication concernee |
|---|---|---|
| | GB - A - 1 418 294 (LUPTON & PLACE)<br><br>* Page 1, ligne 70 - page 2, ligne 22; figure 1 * | 1 |
| | FR - A - 1 336 486 (PASTEUR)<br><br>* Page 1, colonne 1 - colonne 2, 2ème paragraphe; figure 1 * | 1 |
| | FR - A - 1 159 890 (BOUVIER)<br><br>* Page 2, colonne de droite; figures 1-3 * | 1,11 |
| | FR - A - 2 331 982 (ARNAUD)<br><br>* Page 4, lignes 11-27; page 5, ligne 24; figures 1,2 * | 2-6 |
| | US - A - 2 639 541 (LE TANG)<br><br>* Colonne 4, lignes 17-37; figure 3 * | 2,4,6 |
| A | FR - A - 2 348 673 (HABILCLASS) | 15 |

**CLASSEMENT DE LA DEMANDE (Int. Cl. ³)**

A 47 B 21/00
A 47 B 11/00
A 47 B 9/00
F 16 M 11/12

**DOMAINES TECHNIQUES RECHERCHES (Int. Cl. ³)**

A 47 B
F 16 M
A 61 G

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 17-01-1980 | SCHMITTER |

OEB Form 1503.1  06.78